# EUROPÄISCHE PATENTANMELDUNG

(11) **EP 4 682 034 A1**
(43) Veröffentlichungstag der Anmeldung: **21.01.2026**
(21) Anmeldenummer: 24188609.2
(22) Anmeldetag: 15.07.2024
(51) Int. Cl.: B62J 15/02, B62J 11/00, B62K 25/02

(54) **MONTAGEVORRICHTUNG ZUR BEFESTIGUNG EINES ZUBEHÖRTEILS**

(71) Anmelder: Technische Universität Graz, 8010 Graz (AT)
(72) Erfinder: Schnöll, Hans Peter, 8020 Graz (AT)
(74) Vertreter: Hübscher & Partner Patentanwälte GmbH

(57) **Zusammenfassung**

Es wird eine Montagevorrichtung zur Befestigung eines Zubehörteils, umfassend eine von einer Radachse (3) durchsetzte und an wenigstens einem Gabelarm (4) abgestützte Radnabe (5) sowie wenigstens eine Befestigungsstrebe (6) für das Zubehörteil, beschrieben. Um eine derartige Montagevorrichtung zu schaffen, die trotz eines verringerten Fertigungsaufwandes und einfacher Montagebedingungen die Gefahr einer Verformung bzw. Beschädigung der befestigten Zubehörteile auch bei unbeabsichtigtem Umkippen des Fahrrades reduziert und gleichzeitig eine radnahe Anordnung des Zubehörteils ermöglicht, wird vorgeschlagen, dass die wenigstens eine Befestigungsstrebe (6) über ein Befestigungselement (8) auf der dem wenigstens einen Gabelarm (4) zugewandten Radachse (3) oder den dem wenigstens einen Gabelarm (4) zugewandten feststehenden Teilen der Radnabe (5) abgestützt ist.

## Beschreibung

Die Erfindung bezieht sich auf eine Montagevorrichtung zur Befestigung eines Zubehörteils, umfassend eine von einer Radachse durchsetzte und an wenigstens einem Gabelarm abgestützte Radnabe sowie wenigstens eine Befestigungsstrebe für das Zubehörteil. Darüber hinaus bezieht sich die Erfindung auf ein Fahrzeug, bevorzugt ein Zwei- oder Dreirad, noch bevorzugter ein einspuriges Fahrzeug, besonders bevorzugt ein Fahrrad, mit einer erfindungsgemäßen Vorrichtung.

Um Fahrräder mit Zubehörteilen, wie beispielsweise Gepäckträger oder Schutzblechen bzw. Spritzschutzprofilen, auszustatten, sind Montagevorrichtungen bekannt, deren Befestigungsstreben für das Zubehörteil im Bereich der Radachse am Fahrradrahmen angeordnet werden. Dies erfolgt typischerweise unter Zuhilfenahme bereits vorhandener Schnellspanner oder Steckachsen, über welche die Befestigungsstrebe an den Gabelarmen des Fahrrades fixiert wird. Nachteilig an den vorbekannten Montagevorrichtungen ist allerdings, dass die an den Gabelarmen angebrachten Befestigungsstreben anfällig für Beschädigungen sind, und zwar nicht nur infolge von Unfällen, sondern auch aufgrund eigengewichtsbedingter plastischer Verformungen im Falle eines unbeabsichtigten seitlichen Umkippens des Fahrrades. Dies führt insbesondere bei Spritzschutzprofilen regelmäßig dazu, dass diese nicht mehr ordnungsgemäß in Bezug auf das abzudeckende Rad ausgerichtet sind. Nicht zuletzt aufgrund begrenzter Reparaturmöglichkeiten an Ort und Stelle kann dadurch eine weitere Nutzung des Fahrrades durch am Rad schleifende Spritzschutzabschnitte zumindest erheblich erschwert werden. Dazu kommt, dass insbesondere im Bereich der Gabelarme eine radnahe Befestigung verhindert wird.

Der Erfindung liegt somit die Aufgabe zugrunde, eine Vorrichtung der eingangs geschilderten Art zu schaffen, die trotz eines verringerten Fertigungsaufwandes und einfacher Montagebedingungen die Gefahr einer Verformung bzw. Beschädigung der befestigten Zubehörteile auch bei unbeabsichtigtem Umkippen des Fahrrades reduziert und gleichzeitig eine radnahe Anordnung des Zubehörteils ermöglicht.

Die Erfindung löst die gestellte Aufgabe dadurch, dass die wenigstens eine Befestigungsstrebe über ein Befestigungselement auf der dem wenigstens einen Gabelarm zugewandten Radachse oder den dem wenigstens einen Gabelarm feststehenden Teilen der Radnabe abgestützt ist. Als Gabelarme werden im Sinne der Erfindung sowohl lenkerseitige Gabelarme, als auch die das Hinterrad aufnehmenden Rahmenstreben im Bereich des hinterbauseitigen Rahmendreiecks verstanden. Es versteht sich von selbst, dass beispielsweise am Vorderrad nur ein Gabelarm vorgesehen sein kann, wie dies unter anderem von Federgabeln insbesondere aus dem Cross-Country- und Mountainbikebereich bekannt ist. Allerdings kann die wenigstens eine Befestigungsstrebe typischerweise auch über ein zwischen zwei Gabelarmen liegendes Befestigungselement auf der Radachse oder den feststehenden Teilen der zwischen diesen Gabelarmen angeordneten Radnabe abgestützt sein.

Zufolge dieser Merkmale verläuft die sich vorzugsweise radial vom Befestigungselement weg erstreckende, wenigstens eine Befestigungsstrebe nicht in einem der Fahrradaußenseite zugeordneten Bereich außerhalb der Gabelarme, sondern weitgehend innerhalb des sich zwischen den Gabelarmen bzw. zwischen einem Gabelarm und der Felgenaußenseite bildenden Zwischenraumes, in welchem auch das Rad aufgenommen ist. Dadurch kann das Zubehörteil einerseits näher am jeweiligen Rad angeordnet werden und die Gabelarme bzw. der Fahrradrahmen bilden eine Art Überrollschutz bzw. Schutzvorbau in Bezug auf die dahinterliegende Befestigungsstrebe der Montagevorrichtung, sodass bei einem Umkippen des Fahrrades die Gefahr einer Beschädigung der Befestigungsstrebe verringert wird. Vorzugsweise ist das Befestigungselement am feststehenden Nabenkörper unmittelbar oder beispielsweise mittelbar über bekannte, am Nabenkörper stirnseitig aufgebrachte Distanzhülsen, Endkappen oder aber auch Kontermutterverbindungen angeordnet.

Durch die erfindungsgemäßen Maßnahmen wird außerdem die Voraussetzung für eine Vereinheitlichung der Anbindungen bei verschiedenen Rahmengrößen von z.B. Fahrrädern geschaffen. Darüber hinaus sind zur Anbindung der Radnabe grundsätzlich keine Ösen, Gewinde oder Ähnliches mehr am Rahmen bzw. an den Gabelarmen erforderlich, sodass auch ein verringerter Fertigungsaufwand im Rahmen- und Gabelbau ermöglicht wird. Im Hinblick auf das hintere Rahmendreieck ermöglicht die erfindungsgemäße Montagevorrichtung die dortige Anbringung von Streben ohne geometrische Verschneidungen. Ein weiterer Vorteil, der sich erfindungsgemäß ergibt, liegt in der einfachen, wiederholbaren und passgenaue Montage durch klar definierte Anschlagpunkte unabhängig vom Fahrradtyp und von der Fahrradgröße. Außerdem besteht grundsätzlich die Möglichkeit der direkten Abnahme elektrischer Energie aus Nabendynamos zur Verwendung des Betriebs von am Zubehörteil, z.B. einem Schutzblech, befestigten Beleuchtungseinrichtungen, sowie die Möglichkeit der Integration von induktionsgespeisten Beleuchtungen, wie diese beispielsweise als "Reelights" bekannt sind.

Eine Drehsicherung des Befestigungselementes an der Radachse oder den feststehenden Teilen der Radnabe kann beispielsweise dadurch erfolgen, dass das Befestigungselement zwischen der Radnabe und einem Gabelarm kraftschlüssig festgelegt ist. Beispielsweise kann das Befestigungselement über die durch eine Steckachse oder einen Schnellspanner aufgebrachte Spannkraft zwischen dem entsprechenden Gabelarm und der Radnabe kraftschlüssig gehalten werden. Dabei kann in der Regel eine werkzeuglose Montage und Demontage der Vorrichtung ermöglicht werden.

Um in diesem Zusammenhang den Kraftschluss zu verbessern und somit eine zuverlässigere Fixierung des Befestigungselements zu ermöglichen, kann zwischen dem Gabelarm und dem Befestigungselement ein elastisches Dämpfungselement vorgesehen sein. Dieses kann beispielsweise als elastomere und / oder geschäumte Beilagscheibe ausgebildet sein. Die sich bei angezogener Steckachse bzw. angezogenem Schnellspanner einstellende Rückstellkraft des Dämpfungselementes ermöglicht dabei nicht nur eine gleichmäßigere Druckverteilung und somit eine verbesserte Kraftbeaufschlagung des Befestigungselementes, sondern das Dämpfungselement wirkt dabei auch als Toleranzausgleich und dämpft vibrationsbedingte Schwingungen des Zubehörteils.

Insbesondere zur Montage eines oberhalb eines Rades angeordneten Zubehörteils, wie beispielsweise eines Spritzschutzes oder eines Gepäckträgers, empfiehlt es sich, dass sich die wenigstens eine Befestigungsstrebe wenigstens über den Radius eines über die Radnabe gelagerten Rades erstreckt. Grundsätzlich kann auch vorgesehen sein, dass von einem Befestigungselement mehrere Befestigungsstreben ausgehen. Darüber hinaus kann eine erfindungsgemäße Montagevorrichtung lediglich ein an einer Radseite angeordnetes Befestigungselement, oder aber auch zwei einander bezüglich des Rades gegenüberliegende Befestigungselemente aufweisen. Letzteres bietet den Vorteil, dass aufgrund der dann an zwei gegenüberliegenden Nabenabschnitten abgestützten Befestigungsstreben insbesondere eine hohe mechanische Stabilität für die Befestigung von Lasten aufnehmenden Gepäckträgern ermöglicht wird.

Vereinfachte Montagebedingungen ergeben sich, wenn das Befestigungselement wenigstens einen, wenigstens abschnittsweise um die Radachse oder die feststehenden Teile der Radnabe umlaufenden Stützkörper umfasst. Der Stützkörper ermöglicht beim Anbringen der Montagevorrichtung am Fahrrad eine Vorpositionierung, die das Fixieren wesentlich erleichtert. Vorzugsweise ist der Stützkörper vollständig um die Radnabe umlaufend ausgebildet, insbesondere als Hülse. Dadurch ist sowohl beim Anbringen als auch beim Entfernen der Montagevorrichtung am Fahrrad ein Aufschieben bzw. Abziehen des Stützkörpers von der Radnabe besonders einfach vorzunehmen.

Zusätzlich oder alternativ zur spannkraftbedingten Fixiermöglichkeit der Befestigungsaufnahme mithilfe etwaiger Steckachsen bzw. Schnellspanner kann der Stützkörper eine Klemme zum klemmschlüssigen umfangsseitigen Umschließen eines Endabschnittes der Radnabe sein. Beispielsweise kann die Klemme als eine am Umfang offene Schelle ausgebildet sein, die sich über das Anzugsmoment einer Schraubverbindung entsprechend festziehen lässt. Der Stützkörper kann grundsätzlich auch ein Innengewinde aufweisen, sodass über ein am entsprechenden Radnabenabschnitt vorgesehenes Außengewinde eine lösbare Schraubverbindung zwischen Stützkörper und Radnabe ermöglicht wird. Es kann grundsätzlich auch vorgesehen sein, dass z.B. Distanzhülse, Stützkörper und/oder wenigstens eine Befestigungsstrebe gemeinsam in Integralbauweise, d.h. einstückig, gefertigt sind.

Gerade im urbanen Bereich sind Fahrradbesitzer vermehrt mit dem Problem konfrontiert, dass bei lediglich rahmenseitig abgesperrten Fahrrädern deren in der Regel über Schnellspanner bzw. Steckachsen montierte Räder problemlos als Diebesgut entwendet werden können. Vor diesem Hintergrund schafft die erfindungsgemäße Anordnung der Montagevorrichtung innerhalb des sich zwischen den Gabelarmen bildenden Zwischenraumes die Voraussetzung für einen verbesserten Diebstahlschutz des zwischen den Gabelarmen gelagerten Rades. Hierzu muss lediglich die Montagevorrichtung selbst bzw. ein damit verbundenes Zubehörteil so am Fahrradrahmen befestigt werden, dass selbst bei gelöster Achse ein Abziehen des Rades samt Montagevorrichtung vom Fahrradrahmen nicht bzw. nur unter Inkaufnahme einer Beschädigung der jeweiligen Komponenten möglich ist. Die Befestigung der Montagevorrichtung bzw. des Zubehörteiles am Fahrradrahmen dient dabei auch als tangentiale Abstützung der Montagevorrichtung und somit als zusätzliche Drehsicherung derselben. Es kann auch vorgesehen sein, dass die Befestigung der Montagevorrichtung bzw. des Zubehörteiles am Fahrradrahmen über ein verschließbares Schloss oder eine ähnliche Absperreinrichtung erfolgt, sodass dem Fahrradbesitzer trotz der Diebstahlschutzwirkung bei Bedarf die Abnahme des Rades bzw. der Montagevorrichtung ermöglicht wird.

Um im Zusammenhang mit einem Spritzschutz, wie z.B. einemSchutzblech, als Zubehörteil eine verbesserte Schutzwirkung vor Spritzwasser und Schmutz zu ermöglichen, wird vorgeschlagen, dass die Befestigungsstrebe mit einem Spritzschutz verbunden ist, der das Rad umfangsseitig in einem Bogenwinkel zwischen 180° und 300° umspannt. Aufgrund dessen, dass bei einem Bogenwinkel über 180° ein radiales Entfernen des Spritzschutzes vom Rad nicht mehr ohne weiteres möglich ist, bietet die erfindungsgemäße Anordnung den Vorteil, dass die der Spritzschutz auf einfache Weise über die Befestigungsaufnahme der Montagevorrichtung seitlich, das heißt bezüglich des Rades in axialer Richtung, von der Radnabe abgezogen werden kann. Somit ist die Länge des Spritzschutzes nicht mehr dadurch begrenzt, dass das Laufrad in radialer Richtung vom Spritzschutz getrennt können werden muss, weshalb der Spritzschutz einen wesentlich größeren Umfang des Reifens als bisher üblich abdecken kann. Da der der Spritzschutz beim Ausbau am Laufrad verbleibt, ergeben sich außerdem beim Transport des Fahrrades im zerlegten Zustand vorteilhafte Bedingungen, weil sich dadurch das Packmaß erheblich reduziert.

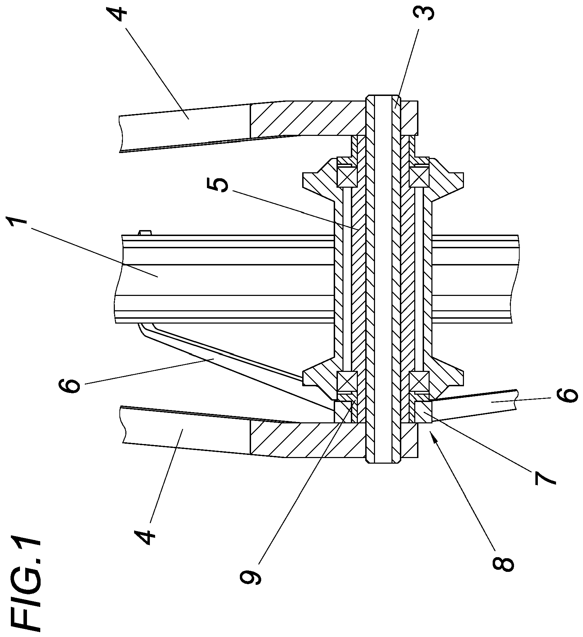

In der Zeichnung ist der Erfindungsgegenstand beispielsweise dargestellt. Es zeigen
- Fig. 1: einen Schnitt durch eine erfindungsgemäße Vorrichtung in einer ersten Ausführungsform,
- Fig. 2: einen schematischen Schrägriss eines Rades mit einer Vorrichtung gemäß Fig. 1 in einem kleineren Maßstab,
- Fig. 3: einen der Fig. 1 entsprechenden Schnitt durch eine erfindungsgemäße Vorrichtung in einer zweiten Ausführungsform,
- Fig. 4: einen schematischen Schrägriss eines Rades mit einer Vorrichtung gemäß Fig. 3 in einem kleineren Maßstab,
- Fig. 5: einen der Fig. 1 entsprechenden Schnitt durch eine erfindungsgemäße Vorrichtung in einer dritten Ausführungsform und
- Fig. 6: einen schematischen Schrägriss eines Rades mit einer Vorrichtung gemäß Fig. 5 in einem kleineren Maßstab.

Eine erfindungsgemäße Montagevorrichtung dient zur Befestigung eines Zubehörteils, beispielsweise einem ein Rad 1 abdeckenden Spritzschutz 2, an einem nicht näher dargestellten Fahrrad oder an ähnlichen Fahrzeugen wie z.B. Motorräder, Mopeds, E-Bikes, Scooter, Lastenfahrräder etc.. Die Montagevorrichtung umfasst eine von einer Radachse 3 durchsetzte und zwischen zwei Gabelarmen 4 angeordnete Radnabe 5, sowie Befestigungsstreben 6 für den Spritzschutz 2. Die Befestigungsstreben 6 sind über ein zwischen den Gabelarmen 4 liegendes, einen Stützkörper 7 umfassendes Befestigungselement 8 auf einer Distanzhülse 9 abgestützt, die an einem Endabschnitt der Radnabe 5 angeordnet ist. Darüber hinaus erstrecken sich die Befestigungsstreben 6 wenigstens über den Radius des über die Radnabe 5 gelagerten Rades 1.

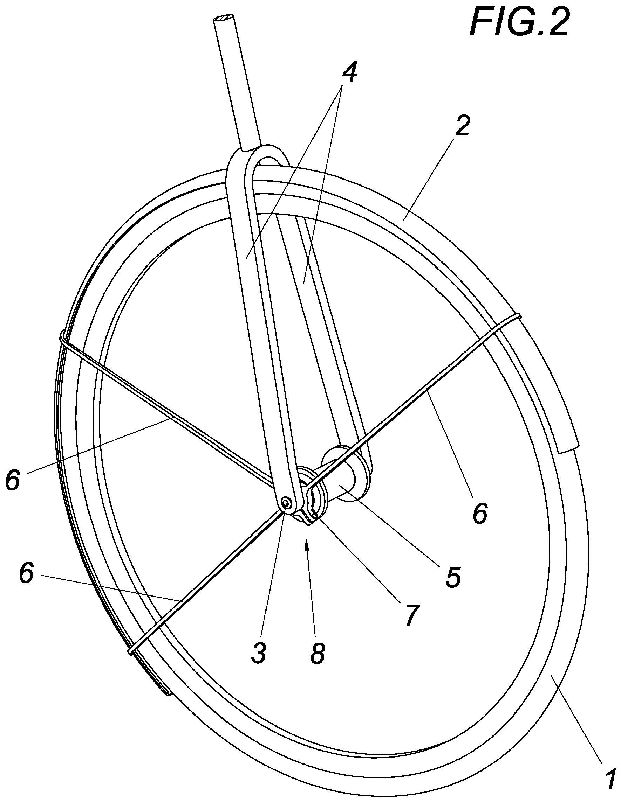

Wie dies in Fig. 2 schematisch angedeutet wird, ist der Stützkörper 7 eine Klemme zum klemmschlüssigen umfangsseitigen Umschließen des entsprechenden Endabschnittes der Radnabe 5. Hierzu ist die Klemme als eine am Umfang offene Schelle ausgebildet sein, die mit einer entsprechenden Inbusverbindung zum Festziehen und Lösen der Schelle ausgestattet ist.

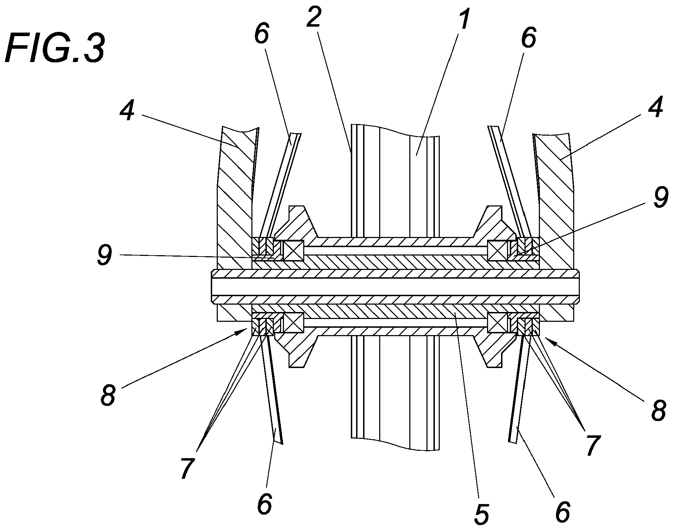

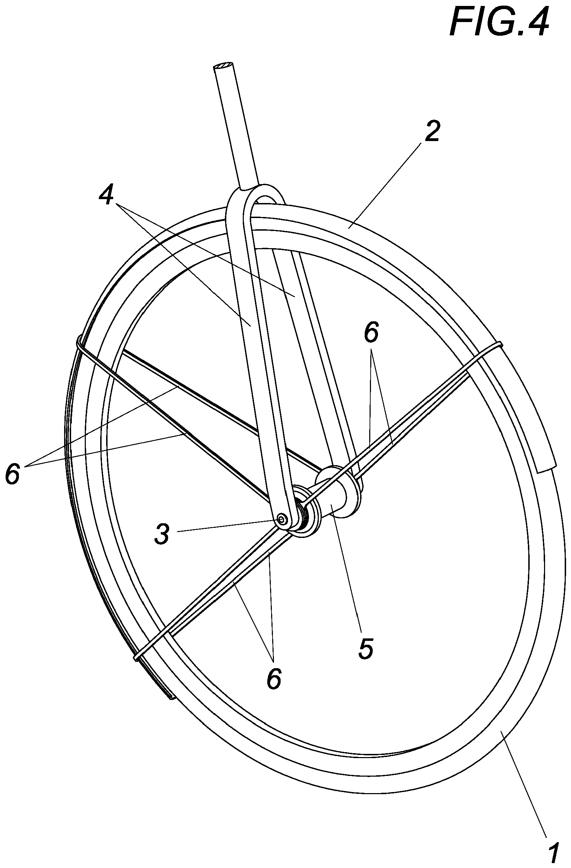

Fig. 3 und 4 zeigen eine zweite Ausführungsform einer erfindungsgemäßen Montagevorrichtung. Hierbei sind beidseits des Rades 1 Befestigungsstreben 6 vorgesehen, die über die jeweils an den Endabschnitten der Radnabe 5 abgestützten Befestigungselemente 8 an den Distanzhülsen 9 der Radnabe 5 abgestützt sind. Die Befestigungselemente 8 weisen jeweils drei um die entsprechenden Distanzhülsen 9 umlaufende Stützkörper 7 auf, wobei jedem der sechs Stützkörper 7 genau eine der sechs Befestigungsstreben 6 zugeordnet ist. Zur Fixierung der in Fig. 3 und 4 gezeigten Montagevorrichtung werden die Befestigungselemente 8 zwischen der Radnabe 5 und einem jeweiligen Gabelarm 4 kraftschlüssig festgelegt.

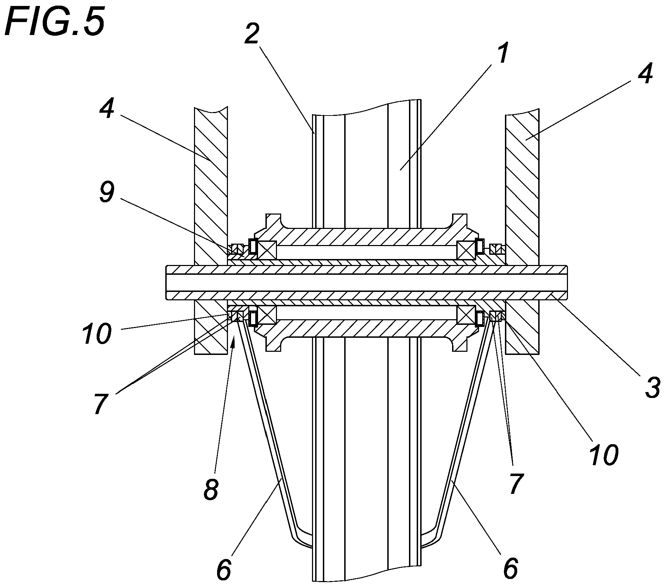

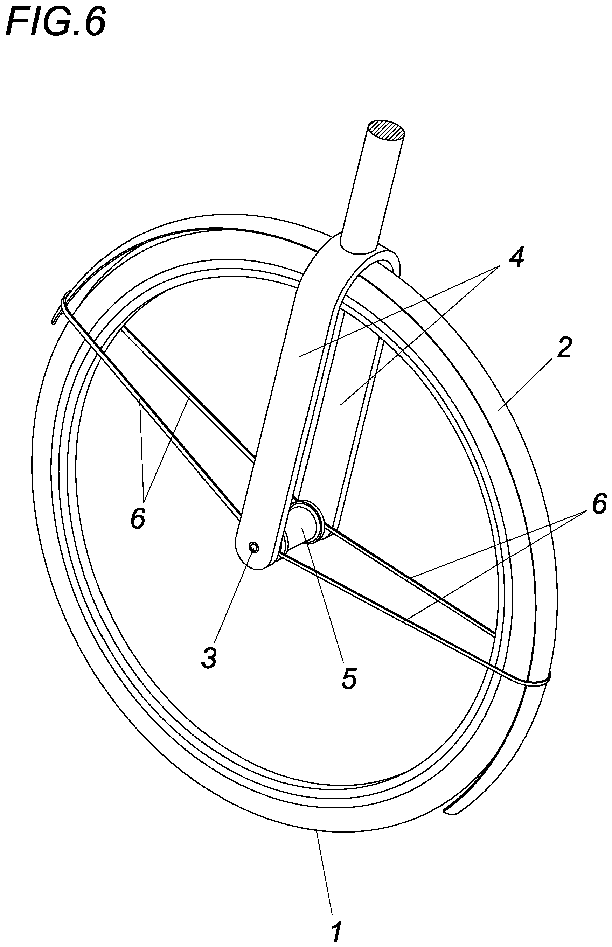

In Fig. 5 und 6 ist schließlich eine dritte Ausführungsform einer erfindungsgemäßen Montagevorrichtung dargestellt. Dabei ist das erste Befestigungselement 8 an dem in der Fig. 5 linken Endabschnitt der Radnabe 5 auf der Distanzhülse 9 abgestützt, wohingegen das zweite Befestigungselement 8 am rechten Endabschnitt der Radnabe 5 unmittelbar auf der Radnabe 5 selbst bzw. am Nabenkörper abgestützt ist. Zur Verbesserung des kraftschlüssigen Festlegens der Befestigungselemente 8 zwischen der Radnabe 5 und einem jeweiligen Gabelarm 4 ist jeweils zwischen einem Gabelarm 4 und einem Befestigungselement 8 ein elastisches Dämpfungselement 10 angeordnet. Die Dämpfungselemente 10 ermöglichen dabei nicht nur eine gleichmäßigere Druckverteilung und somit eine verbesserte Kraftbeaufschlagung der Befestigungselemente 8, sondern dienen auch als Toleranzausgleich und zur Dämpfung vibrationsbedingter Schwingungen des Spritzschutzes 2.

Wie dies aus den Fig. 2, 4 und 6 ersichtlich ist, umspannt der jeweilige Spritzschutz 6 das entsprechende Rad 1 umfangsseitig in einem Bogenwinkel von mehr als 180°.

## Patentansprüche

1. Montagevorrichtung zur Befestigung eines Zubehörteils, umfassend eine von einer Radachse (3) durchsetzte und an wenigstens einem Gabelarm (4) abgestützte Radnabe (5) sowie wenigstens eine Befestigungsstrebe (6) für das Zubehörteil, **dadurch gekennzeichnet, dass** die wenigstens eine Befestigungsstrebe (6) über ein Befestigungselement (8) auf der dem wenigstens einen Gabelarm (4) zugewandten Radachse (3) oder den dem wenigstens einen Gabelarm (4) zugewandten feststehenden Teilen der Radnabe (5) abgestützt ist.

2. Montagevorrichtung nach Anspruch 1, **dadurch gekennzeichnet, dass** die wenigstens eine Befestigungsstrebe (6) über ein zwischen zwei Gabelarmen (4) liegendes Befestigungselement (8) auf der Radachse (3) oder den feststehenden Teilen einer zwischen diesen Gabelarmen (4) angeordneten Radnabe abgestützt ist.

3. Montagevorrichtung nach Anspruch 1 oder 2, **dadurch gekennzeichnet, dass** sich die Befestigungsstrebe (6) wenigstens über den Radius eines über die (5) Radnabe gelagerten Rades (1) erstreckt.

4. Montagevorrichtung nach einem der Ansprüche 1 bis 3, **dadurch gekennzeichnet, dass** das Befestigungselement (8) einen wenigstens abschnittsweise um die Radachse (3) oder die feststehenden Teile der Radnabe (5) umlaufenden Stützkörper (7) umfasst.

5. Vorrichtung nach Anspruch 4, **dadurch gekennzeichnet, dass** der Stützkörper (7) eine Klemme zum klemmschlüssigen umfangsseitigen Umschließen eines Endabschnittes der Radnabe (5) ist.

6. Vorrichtung nach einem der Ansprüche 1 bis 5, **dadurch gekennzeichnet, dass** das Befestigungselement (8) zwischen der Radnabe (5) und einem Gabelarm (4) kraftschlüssig festgelegt ist.

7. Vorrichtung nach Anspruch 6, **dadurch gekennzeichnet, dass** zwischen dem Gabelarm (4) und dem Befestigungselement (8) ein elastisches Dämpfungselement (10) vorgesehen ist.

8. Vorrichtung nach einem der Ansprüche 1 bis 7, **dadurch gekennzeichnet, dass** die Befestigungsstrebe (6) mit einem Spritzschutz (2) verbunden ist, der das Rad (1) umfangsseitig in einem Bogenwinkel zwischen 180° und 300° umspannt.

9. Fahrzeug mit einer Vorrichtung nach einem der vorangegangenen Ansprüche.
